# EUROPÄISCHE PATENTANMELDUNG

(11) **EP 3 210 742 A1**
(43) Veröffentlichungstag der Anmeldung: **30.08.2017**
(21) Anmeldenummer: 17151847.5
(22) Anmeldetag: 17.01.2017
(51) Int. Cl.: B29C 45/16, B29C 45/14, B29L 31/00

(54) **VERFAHREN ZUM HERSTELLEN EINES MEHRKOMPONENTEN-SPRITZGUSS-FORMTEILES UND MEHRKOMPONENTEN-SPRITZGUSS-FORMTEILE**

(30) Priorität: 26.02.2016 DE 102016103488
(71) Anmelder: INOTECH Kunststofftechnik GmbH, 92507 Nabburg (DE)
(72) Erfinder: Gleixner, Josef, 93047 Regensburg (DE)
(74) Vertreter: Hannke, Christian

(57) **Zusammenfassung**

Die Erfindung betrifft Verfahren zum Herstellen eines Mehrkomponenten-Spritzguss-Formteiles umfassend folgende Verfahrensschritte:
a. Einbringen eines folienartigen Elements in einen ersten Formhohlraum, so dass eine erste Oberfläche des folienartigen Elements an einer Innenwand des ersten Formhohlraums anliegt, wobei eine zweite Oberfläche des folienartigen Elements mit dreidimensionalen Elementen bestückt ist, welche von der zweiten Oberfläche des folienartigen Elements in den ersten Formhohlraum hineinragen;
b. Einbringen eines Formkerns (9) in den ersten Formhohlraum, so dass eine erste Kavität gebildet wird;
c. Einspritzen eines ersten Kunststoffmaterials in die erste Kavität, wobei das eingespritzte erste Kunststoffmaterial die dreidimensionalen Elemente umschließt und mit dem folienartigen Element eine Verbindung eingeht, wobei hierdurch ein Vorspritzteil mit einer äußeren Oberfläche, an welcher das folienartige Element haftet, gebildet wird;
d. Transferieren des Vorspritzteils in einen zweiten Formhohlraum, wobei die äußere Oberfläche des Vorspritzteils und eine Innenwand des zweiten Formhohlraums eine zweite Kavität bilden;
e. Einspritzen eines zweiten Kunststoffmaterials in die zweite Kavität), wobei das eingespritzte zweite Kunststoffmaterial mit dem folienartigen Element (2) eine Verbindung eingeht.

## Beschreibung

Die vorliegende Erfindung betrifft in einem ersten Aspekt ein Verfahren zum Herstellen eines Mehrkomponenten-Spritzguss-Formteiles. In einem weiteren Aspekt betrifft die Erfindung ein Formteil, insbesondere ein Behältnis, hergestellt durch ein Mehrkomponenten-Spritzgussverfahren und umfassend eine äußere Wandungsschicht und eine innere Wandungsschicht, wobei die innere Wandungsschicht aus einem ersten Kunststoffmaterial besteht und die äußere Wandungsschicht aus einem zweiten Kunststoffmaterial besteht.

Zur Herstellung von Behältern, beispielsweise für Kosmetikprodukte, werden in der Regel Formverfahren angewendet. Spritzgießverfahren sind dabei besonders dafür geeignet solche Behälter herzustellen. Bei Kosmetikartikeln, insbesondere bei hochpreisigen Kosmetikartikeln, ist das Erscheinungsbild des Behälters besonders wichtig. Das Erscheinungsbild eines solchen Behälters wird entscheidend durch Beschriftungen, Etiketten und durch anderweitige dekorative Elemente geprägt. Ein besonderes Augenmerk liegt dabei auch auf dem Anbringen von solchen Beschriftungen, Etiketten bzw. der dekorativen Elemente. Bisher wurden Beschriftungen bzw. Etiketten lediglich aufgeklebt. Im Stand der Technik sind aber auch bereits Verfahren bekannt, bei welchen Etikettfolien bereits in die Spritzgussform eingelegt werden und dann mit dem Kunststoffmaterial hinterspritzt werden, so dass die Etikettfolien eine fest anliegende Außenhülle bilden. Derartige Etiketten und Beschriften haben jedoch zum Nachteil, dass diese durch äußere Einflüsse, beispielsweise durch Transport oder längere Benutzung des Behältnisses, beschädigt werden können, worunter das Erscheinungsbild des Behältnisses deutlich leiden würde.

Aufgabe der Erfindung ist es ein effizientes Spritzgussverfahren zur Herstellung von Mehrkomponenten-Spritzguss-Formteilen zur Verfügung zu stellen, durch welches die oben genannten Nachteile vermieden werden können. Ferner ist es Aufgabe der Erfindung einen solches Formteil zur Verfügung zu stellen.

Diese Aufgabe wird gelöst von einem Verfahren zum Herstellen eines Mehrkomponenten-Spritzguss-Formteiles umfassend folgende Verfahrensschritte:
a. Einbringen eines folienartigen Elements in einen ersten Formhohlraum, so dass eine erste Oberfläche des folienartigen Elements an einer Innenwand des ersten Formhohlraums anliegt, wobei eine zweite Oberfläche des folienartigen Elements mit dreidimensionalen Elementen bestückt ist, welche von der zweiten Oberfläche des folienartigen Elements in den ersten Formhohlraum hineinragen;
b. Einbringen eines Formkerns in den ersten Formhohlraum, so dass eine erste Kavität gebildet wird;
c. Einspritzen eines ersten Kunststoffmaterials in die erste Kavität, wobei das eingespritzte erste Kunststoffmaterial die dreidimensionalen Elemente umschließt und mit dem folienartigen Element eine Verbindung eingeht, wobei hierdurch ein Vorspritzteil mit einer äußeren Oberfläche, an welcher das folienartige Element haftet, gebildet wird;
d. Transferieren des Vorspritzteils in einen zweiten Formhohlraum, wobei die äußere Oberfläche des Vorspritzteils und eine Innenwand des zweiten Formhohlraums eine zweite Kavität bilden;
e. Einspritzen eines zweiten Kunststoffmaterials in die zweite Kavität, wobei das eingespritzte zweite Kunststoffmaterial mit dem folienartigen Element eine Verbindung eingeht.

Durch ein solches erfindungsgemäßes Verfahren können Formteile hergestellt werden, welche Wandungen aufweisen, in denen dreidimensionale Elemente, beispielsweise Dekorationselemente, eingebracht sind. Dekorative Elemente bzw. Beschriftungen können somit in die Behältniswandungen integriert werden. Somit können beispielsweise Behältnisse für Kosmetikartikel mit einem besonders ansprechenden Design einfach und kostengünstig hergestellt werden. Ferner sind die erste und die zweite Oberfläche des folienartigen Elements offensichtlich gegenüberliegende Oberflächen. Vorzugsweise sind die Verbindungen zwischen dem folienartigen Element und dem ersten Kunststoffmaterial bzw. zwischen dem folienartigen Element und dem zweiten Kunststoffmaterial Schweißverbindungen.

Vorzugsweise sind der erste Formhohlraum und der zweite Formhohlraum Teil des gleichen Formwerkzeugs. Denkbar wäre aber auch, dass die beiden Formhohlräume jeweils Teil eines separaten Formwerkzeuges sind. Das Transferieren des Vorspritzteils würde somit auch einen Transfer in ein weiteres Formwerkzeug umfassen. Der jeweilige Formhohlraum wird durch seine Innenwände begrenzt. Durch Einbringen des Formkerns in den Formhohlraum wird die jeweilige Kavität gebildet, in welches Kunststoffmaterial eingespritzt werden kann.

Vorzugsweise wird das erste Kunststoffmaterial durch eine erste Einspritzdüse in den ersten Formhohlraum eingespritzt. Weiter bevorzugt ist der erste Formhohlraum als ein Hohlzylinder ausgebildet, welcher mit einer Stirnwandung abgeschlossen ist. Vorteilhafterweise ist die erste Einspritzdüse zentrisch in dieser Stirnwandung angeordnet. Die Erfindung ist jedoch nicht auf eine solche Ausführung beschränkt. Die erste Einspritzdüse kann beliebig platziert werden, beispielsweise auch an einer Seitenwand des ersten Formhohlraums oder in dem Formkern angeordnet sein.

Vorzugsweise ist der erste Formhohlraum in einem stationären Element des Formwerkzeuges angeordnet, d.h. der erste Formhohlraum ist unbeweglich ausgebildet. Es wäre dabei auch denkbar mehrere solcher Formhohlräume in dem stationären Element anzuordnen. So können in einem Arbeitszyklus mehrere Formteile hergestellt werden.

Bevorzugt erfolgt das Einbringen des folienartigen Elements mit einem Greifelement, vorzugsweise einem Vakuumgreifelement. Es wäre jedoch auch die Verwendung eines mechanischen Greifers, eines Roboterarms oder ein Einlegen per Hand denkbar.

Nach einem weiteren bevorzugten Gedanken der Erfindung ist der Formkern zylinderförmig ausgebildet und wird zentrisch in den ersten Formhohlraum eingebracht, so dass ein Abstand zwischen der Mantelfläche des Formkerns und einer Innenwandfläche des ersten Formhohlraums die Wandstärke des Vorspritzteils definieren.

Nach dem Einlegen der Folie wird der Formkern in den ersten Formhohlraum eingebracht. Vorzugsweise ist dieser Formkern auf einem beweglichen Element angeordnet, welches relativ zu dem stationären Element derart verlagerbar ist, dass der Formkern senkrecht zur Öffnungsebene des ersten bzw. zweiten Formholraums bewegt werden kann. Das bewegliche Element wird vorzugsweise hydraulisch oder elektromechanisch angetrieben. Offensichtlich müsste vor dem Einbringen des Formkerns in den ersten Formhohlraum das Greifelement aus der Werkzeugebene transferiert werden. Dies kann durch einen hydraulischen oder elektromechanischen Antrieb erfolgen.

Der erste Formhohlraum und der Formkern weisen bevorzugt aneinander anliegende oder ineinandergreifende Elemente, beispielsweise Flansche, auf, so dass nach dem Eindringen des Formkerns in den ersten Formhohlraum eine geschlossene Kavität durch diese beiden Elemente gebildet wird. Die Kavität ist demnach der Raum des ersten Formhohlraums, welcher nicht durch den Formkern ausgefüllt wird.

Das einzuspritzende Kunststoffmaterial wird bevorzugt in einer Plastifiziereinheit plastifiziert. Eine solche Plastifiziereinheit umfasst unter anderem einen Plastifizierzylinder mit einer Schnecke und Heizelemente. Das plastifizierte Kunststoffmaterial wird dann vorzugsweise über einen Angusskanal der entsprechenden Kavität zugeführt.

In der Einspritzphase wird dabei das plastifizierte Kunststoffmaterial über die erste Einspritzdüse in die Kavität unter einem hohen Druck in die Kavität eingespritzt. Der Druck liegt dabei bevorzugt zwischen einem Wert von ca. 1 MPa und ca. 200 MPa. Das plastifizierte Kunststoffmaterial hat bei dem Einspritzen vorzugsweise eine Temperatur zwischen 100°C und 400°C. Die die Kavität bildenden Elemente haben jedoch eine geringere Temperatur von vorzugsweise zwischen 80°C und 120°C. Bei Kontakt mit den vergleichsweise kalten Wandbereichen der Kavität erstarrt der Kunststoff, bei Erreichen des Erstarrungspunkts des jeweiligen Materials. Um eine möglichst homogene Verteilung des Kunststoffmaterials in der Kavität zu gewährleisten, muss das Kunststoffmaterial entsprechend schnell in die Kavität eingebracht werden. Die Einspritzgeschwindigkeit liegt vorzugsweise zwischen 5 ccm/s und 40 ccm/s.

Die Verwendung der mit den dreidimensionalen Elementen bestückten Folie hat also auch zum Vorteil, dass die dreidimensionalen Elemente beim Einspritzvorgang an ihrer angedachten Position gehalten werden. Die dreidimensionalen Elemente werden dann von dem eingespritzten Kunststoffmaterial umgeben bzw. umschlossen. Das folienartige Element wird erfindungsgemäß derart ausgewählt, dass es eine Verbindung mit dem eingespritzten Kunststoff eingeht. Vorzugsweise ist diese Verbindung eine Schmelzverbindung. Erfindungsgemäß wird hierdurch ein Vorspritzteil mit einer äußeren Oberfläche gebildet, an welcher das folienartige Element haftet.

Nachdem vollständigen Füllen der Kavität kühlt das Kunststoffmaterial auf eine Temperatur von ca. 80°C und 120°C ab. Durch die damit einhergehende thermische Kontraktion des Materials folgt eine Volumenschwindung des Vorspritzteils. Demzufolge entformt das Vorspritzteil aus dem ersten Formhohlraum und kann aus diesem entfernt werden.

Vorteilhafterweise bleibt das Vorspritzteil weiterhin auf dem Formkern angeordnet und wird durch diesen in den zweiten Formhohlraum transferiert. Durch das Einbringen des Vorspritzteils bzw. des Formkerns in den zweiten Formhohlraum wird eine zweite Kavität gebildet. Analog zum ersten Formhohlraum weist vorzugsweise auch der zweite Formhohlraum Elemente auf, welche zu den entsprechenden Elementen am Formkern anliegen oder ineinandergreifen.

Bevorzugt wird der Formkern mit dem Vorspritzteil zentrisch in den zweiten Formhohlraum eingebracht, so dass ein Abstand zwischen der Mantelfläche des Vorspritzteils und einer Innenwandfläche des zweiten Formhohlraums die Wandstärke der zweiten Schicht des Formteils definieren.

Vorteilhafterweise wird das zweite Kunststoffmaterial durch eine zweite Einspritzdüse in den zweiten Formhohlraum eingespritzt, wobei der zweite Formhohlraum als ein Hohlzylinder ausgebildet ist, welcher mit einer Stirnwandung abgeschlossen ist, wobei die zweite Einspritzdüse zentrisch in dieser Stirnwandung angeordnet ist. Die Erfindung ist jedoch nicht auf eine solche Ausführung beschränkt. Die zweite Einspritzdüse kann beliebig platziert werden, beispielsweise auch an einer Seitenwand des zweiten Formhohlraums oder in dem Formkern angeordnet sein.

In der zweiten Einspritzphase wird dabei das plastifizierte Kunststoffmaterial über die zweite Einspritzdüse in die zweite Kavität unter gleichen oder ähnlichen Bedingungen wie bei der ersten Einspritzphase eingebracht. Vorzugsweise geht dabei das eingespritzte zweite Kunststoffmaterial mit der zweiten Oberfläche des folienartigen Elements eine Verbindung ein. Vorzugsweise ist auch diese Verbindung eine Schmelzverbindung. Diese zweite Oberfläche des folienartigen Elements ist die Oberfläche, welche zumindest abschnittsweise die Mantelfläche des Vorspritzteils bildet.

Ebenso erfolgt auch hier bevorzugt eine Entformung aus dem zweiten Formhohlraum durch eine Volumenschwindung des Formteils. Das Formteil kann nun weiteren Verfahrensschritten zugeführt werden beispielsweise einer weiteren Entformung von dem Formkern.

Nach einem vorteilhaften Gedanken der Erfindung wird das erste Kunststoffmaterial in die erste Kavität und/oder das zweite Kunststoffmaterial in die zweite Kavität über jeweils einen Heißkanal eingespritzt. Das von der Plastifiziereinheit zu der jeweiligen Einspritzdüse führende Angusssystem ist hierdurch vorteilhaft von dem Formwerkzeug thermisch isoliert. Bei anderweitigen Angusssystemen erstarrt das Kunststoffmaterial in dem Angusssystem. Der sogenannte Anguss muss dann von dem Formteil abgetrennt werden. Dies erfordert zusätzliche Werkzeuge. Ferner muss das zusätzliche Kunststoffmaterial entsorgt werden. Bei der Verwendung eines Heißkanals wird das Angusssystem auf einer entsprechend hohen Temperatur gehalten, so dass der Anguss nicht erstarrt.

Denkbar wäre auch, dass der erste oder der zweite Formhohlraum Wandungen aufweist, welche Formabschnitte aufweisen, durch welche ein Gewinde in der ersten bzw. zweiten Wandungsschicht des Formteils erzeugt wird. Demnach würde vorteilhafterweise die erste oder die zweite Wandungsschicht des fertigen Formteils ein Gewinde aufweisen, auf welchem ein weiteres Element, beispielsweise ein Deckel, aufgeschraubt werden kann.

Nach einem vorteilhaften Gedanken der Erfindung wird das folienartige Element vor dem Einbringen in den ersten Formholraum zu einem Streifen mit einer Länge und einer Breite zugeschnitten. Vorzugsweise wird hierbei ein Laserschneideverfahren verwendet. Durch ein solches Verfahren ist ein höchst genaues Zuschneiden ermöglicht. Vorzugsweise ist die Länge des Streifens kleiner oder gleich dem inneren Umfang des hohlzylindrischen ersten Formhohlraums. Dadurch werden unerwünschte Überlappungen des folienartigen Elements in dem ersten Formhohlraum vermieden. Um ein passgenaues Einbringen des folienartigen Elements zu ermöglichen, ist die Breite Streifen bevorzugt kleiner oder gleich der Höhe des hohlzylindrischen ersten Formhohlraums. Die Erfindung ist jedoch nicht auf eine solche Streifenform beschränkt. Das folienartige Element kann gemäß einer beliebigen geometrischen Struktur ausgebildet sein.

Beim Einspritzen des ersten Kunststoffmaterials in den ersten Formholraum ist es vorteilhaft, wenn das folienartige Element vollständig an der Innenwand des ersten Formholraums anliegt. Abweichende Lagen des folienartigen Elements könnten beispielweise zu Lufteinschlüssen führen. Ein solches vollständiges Anliegen ist auch notwendig hinsichtlich einer genauen Positionierung der dreidimensionalen Elemente in dem endgültigen Formteil.

Demnach wäre es vorteilhaft, dass das folienartige Element eine Dicke aufweist, welche dahingehend dimensioniert ist, dass das folienartige Element eine ausreichende Elastizität aufweist, so dass das folienartige Element nach dem Einbringen in den ersten Formhohlraum selbständig an der Innenwand des ersten Formhohlraums anliegt. Durch ein solches selbständiges Anliegen wird eine genaue Positionierung des folienartigen Elements in dem ersten Formholraum bzw. eine genaue Positionierung der dreidimensionalen Elemente in dem fertigen Formteil erreicht. Es wäre aber auch denkbar, dass die Positionierung des folienartigen Elements durch Haltevorrichtungen, Ansaugvorrichtungen in dem ersten Formholraum erfolgt. Ferner wäre es auch denkbar zur Positionierung des folienartigen Elements elektrostatische Kräfte zu verwenden.

Die dreidimensionalen Elemente können vorzugsweise in Form von Mustern oder Schriftzügen auf der Folie angeordnet sein. Offensichtlich sollte die Bindung der dreidimensionalen Elemente zu dem folienartigen Element ausreichend stark sein, so dass die Elemente sich nicht während des Einspritzvorgangs von dem folienartigen Element lösen. Nach einer besonders vorteilhaften Ausführungsform sind die dreidimensionalen Elemente Strasssteine. Vorzugsweise sind die dreidimensionalen Elemente bzw. die Strasssteine auf dem folienartigen Element mit einem geeignetem Adhäsiv aufgeklebt.

Gemäß einer weiteren besonders vorteilhaften Ausführungsform sind das eingespritzte erste Kunststoffmaterial, das eingespritzte zweite Kunststoffmaterial und das eingebrachte folienartige Element transparent. In dem fertigen Endprodukt ist die Folie somit nicht oder nur geringfügig erkennbar. Die durch die Anordnung der dreidimensionalen Elemente bzw. Strasssteine erzeugten Muster bzw. Schriftzüge erzeugen so eine Art 3D-Effekt in dem transparenten Material der Wandung des Formteils. Somit können beispielsweise Behältnisse für Kosmetikartikel mit einem besonders ansprechenden Design hergestellt werden. Die dreidimensionalen Elemente können beispielsweise in einer Seitenwandung oder in einer Stirnwandung angeordnet werden.

Denkbar wäre auch, dass das eingespritzte erste Kunststoffmaterial, das eingespritzte zweite Kunststoffmaterial und das eingebrachte folienartige Element sich farblich unterscheiden. So können vorteilhaft beliebige Farbkombinationen erzeugt werden.

Vorzugsweise werden das eingespritzte erste Kunststoffmaterial, das eingespritzte zweite Kunststoffmaterial und das eingebrachte folienartige Element aus dem gleichen Kunststoffmaterial ausgewählt. Besonders bevorzugt sind das eingespritzte erste Kunststoffmaterial, das eingespritzte zweite Kunststoffmaterial und das eingebrachte folienartige Element Thermoplasten, beispielsweise Acrylnitril-Butadien-Styrol-Copolymerisat (ABS), Polycarbonat (PC), Styrol-Acrylnitril (SAN), Polymethylmethacrylat (PMMA), Polyethylenterephthalat PET.

Es wäre auch denkbar, dass bereits die Herstellung des Vorspritzteils mehrere Einspritzvorgänge erfordert. Beispielsweise wäre es denkbar, dass an der Wandung des Formhohlraums Vorsprünge bzw. Schieber angeordnet sind, welche den Formkern kontaktieren und somit bestimmte Abschnitte in der Kavität begrenzen. In einem ersten Einspritzvorgang wird dann lediglich der erste Abschnitt mit Kunststoff befüllt. In einem weiteren Verfahrensschritt wird dann in einem weiteren Formhohlraum ein weiterer Abschnitt des Vorspritzteils gefertigt. Die eingespritzten Kunststoffmaterialen sollten hierbei jedoch so gewählt werden, dass sie eine Verbindung eingehen. Demzufolge könnte bereits das Vorspritzteil aus mehreren Abschnitten mit unterschiedlichen Kunststoffmaterialen, welche sich beispielsweise farblich unterscheiden, bestehen. Ebenso wäre es denkbar in jedem Abschnitt ein entsprechendes folienartiges Element mit dreidimensionalen Elementen anzuordnen.

Die vorliegende Erfindung ist auch nicht darauf beschränkt, dass nur eine weitere Schicht von Kunststoffmaterial auf das Vorspritzteil aufgebracht wird. Es wäre denkbar zwei oder weitere Schichten auf das Vorspritzteil aufzubringen.

Die Aufgabe wird weiterhin gelöst von einem Formteil, insbesondere ein Behältnis, hergestellt durch ein Mehrkomponenten-Spritzgussverfahren und umfassend eine äußere Wandungsschicht und eine innere Wandungsschicht, wobei die innere Wandungsschicht aus einem ersten Kunststoffmaterial besteht und die äußere Wandungsschicht aus einem zweiten Kunststoffmaterial besteht. Das Behältnis zeichnet sich dadurch aus, dass zwischen der äußeren Wandungsschicht und der inneren Wandungsschicht ein folienartiges Element, welches mit dreidimensionalen Elementen bestückt ist, angeordnet ist, wobei die dreidimensionalen Elemente von dem ersten Kunststoffmaterial der inneren Wandungsschicht umschlossen sind, und wobei zwischen dem ersten Kunststoffmaterial der inneren Wandung und dem folienartigen Element und zwischen dem zweiten Kunststoffmaterial des äußeren Wandung und dem folienartigen Element eine Verbindung besteht.

Vorzugsweise sind die Verbindungen zwischen dem folienartigen Element und dem ersten Kunststoffmaterial bzw. zwischen dem folienartigen Element und dem zweiten Kunststoffmaterial Schweißverbindungen.

Vorzugsweise ist das Formteil als ein Hohlzylinder, insbesondere ein kreisförmiger Hohlzylinder, ausgebildet, welcher mit einer Stirnwandung abgeschlossen ist. Die dreidimensionalen Elemente können hierbei in den seitlichen Wandungen oder in der Stirnwandung angeordnet sein. Ferner wäre denkbar, dass die seitlichen Wandungen des Hohlzylinders ein Gewinde aufweisen. Auf ein solches Gewinde könnte dann ein Deckel aufgeschraubt werden, wobei auch Wandbereiche des Deckels mit den erfindungsgemäßen dreidimensionalen Elementen ausgestattet sein können.

Nach einem besonders bevorzugten Gedanken der Erfindung ist das folienartige Element als Streifen mit einer Länge und einer Breite ausgebildet, wobei die Länge des Streifens sich entlang des Umfangs der inneren Wandungsschicht zumindest abschnittsweise erstreckt.

Die dreidimensionalen Elemente können vorzugsweise in Form von Mustern oder Schriftzügen auf der Folie angeordnet sein. Offensichtlich sollte die Bindung der dreidimensionalen Elemente zu dem folienartigen Element ausreichend stark sein, so dass die Elemente sich nicht während eines Einspritzvorgangs von dem folienartigen Element lösen. Nach einer besonders vorteilhaften Ausführungsform sind die dreidimensionalen Elemente Strasssteine. Die dreidimensionalen Elemente können beispielsweise in einer Seitenwandung oder in einer Stirnwandung angeordnet werden.

Gemäß einer weiteren besonders vorteilhaften Ausführungsform sind das erste Kunststoffmaterial, das zweite Kunststoffmaterial und das folienartige Element transparent. In dem Formteil ist die Folie somit nicht oder nur geringfügig erkennbar. Die durch die Anordnung der dreidimensionalen Elemente bzw. Strasssteine erzeugten Muster bzw. Schriftzüge erzeugen so eine Art 3D-Effekt in dem transparenten Material der Wandung des Formteils. Somit können beispielsweise Behältnisse für Kosmetikartikel mit einem besonders ansprechenden Design hergestellt werden. Ferner wäre denkbar, dass die der Verwendung für Kosmetikartikel in dem Behältnis ein weiterer Behälter eingesteckt werden kann, in welchen dann das entsprechende Produkt untergebracht ist.

Vorzugsweise sind das erste Kunststoffmaterial, das zweite Kunststoffmaterial und das eingebrachte folienartige Element aus dem gleichen Kunststoffmaterial ausgewählt. Besonders bevorzugt sind das erste Kunststoffmaterial, das zweite Kunststoffmaterial und das folienartige Element Thermoplasten, beispielsweise Acrylnitril-Butadien-Styrol-Copolymerisat (ABS), Polycarbonat (PC), Styrol-Acrylnitril (SAN), Polymethylmethacrylat (PMMA), Polyethylenterephthalat PET.

Vorteilhafterweise ist die Verbindung zwischen dem folienartigen Element und dem ersten Kunststoffmaterial der inneren Wandungsschicht und die Verbindung zwischen dem folienartigen Element und dem zweiten Kunststoffmaterial der äußeren Wandungsschicht eine Schmelzverbindung.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: ein Verlaufsdiagramm des Verfahrens zum Herstellen eines Mehrkomponenten-Spritzguss-Formteiles;
- Fig.2a: schematische Ansicht des Formwerkzeugs;
- Fig.2b: schematische Ansicht des Formwerkzeugs;
- Fig.2c: schematische Ansicht des zweiten Formwerkzeugs;
- Fig.3: schematische Ansicht eines Formwerkzeugs mit folienartigen Element;
- Fig.3a: schematische Ansicht des folienartigen Elements;
- Fig.4: eine isometrische Ansicht des Vorspritzlings;
- Fig.5: eine isometrische Ansicht des Vorspritzlings mit teilweise aufgespritzter zweiter Schicht;

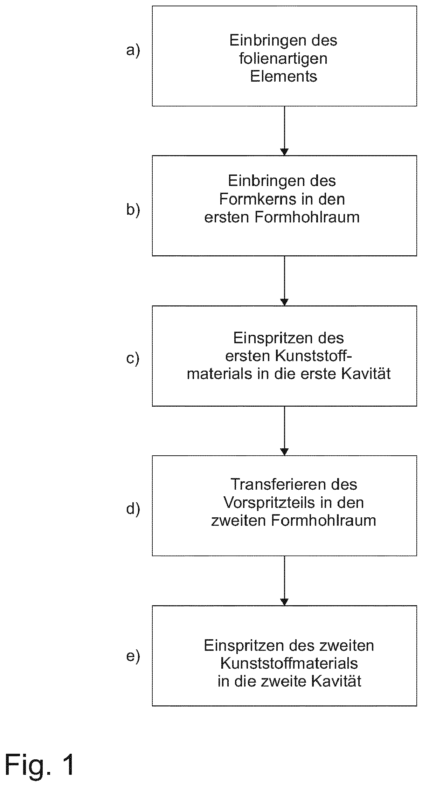

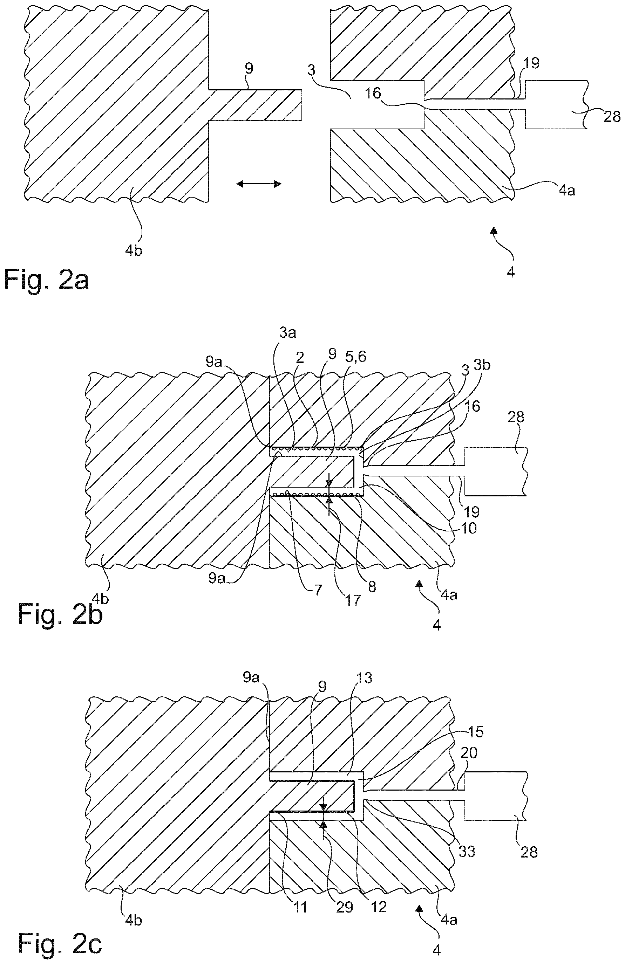

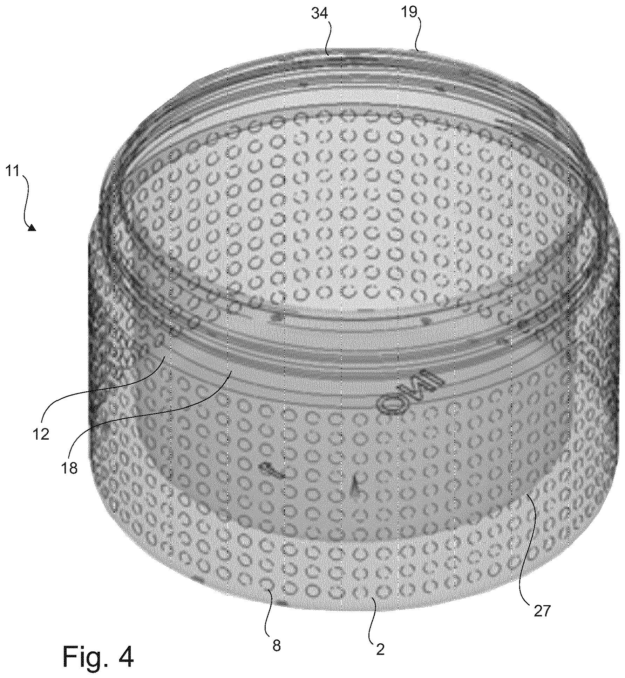

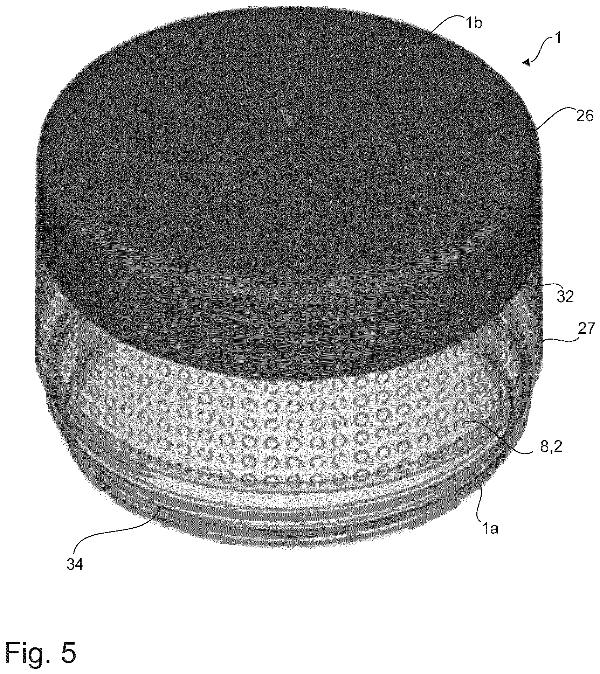

Figur 1 zeigt ein Verlaufsdiagramm des Verfahrens zum Herstellen eines Mehrkomponenten-Spritzguss-Formteiles (1). Die Figuren 2a, 2b 2c und 3 zeigen eine schematische Ansicht des Formwerkzeugs (4). Die Figuren 4 und 5 zeigen das Vorspritzteil.

In einem ersten Verfahrensschritt a. werden folienartige Elemente (2) in einen ersten Formhohlraum (3) eingebracht, so dass eine erste Oberfläche (5) des folienartigen Elements (2) an einer Innenwand (6) des ersten Formhohlraums (3) anliegt. Eine zweite Oberfläche (7) des folienartigen Elements (2) ist mit dreidimensionalen Elementen (8) bestückt, wobei die dreidimensionalen Elemente (8) ausgehend von der zweiten Oberfläche (7) des folienartigen Elements (2) in den ersten Formhohlraum (3) hineinragen.

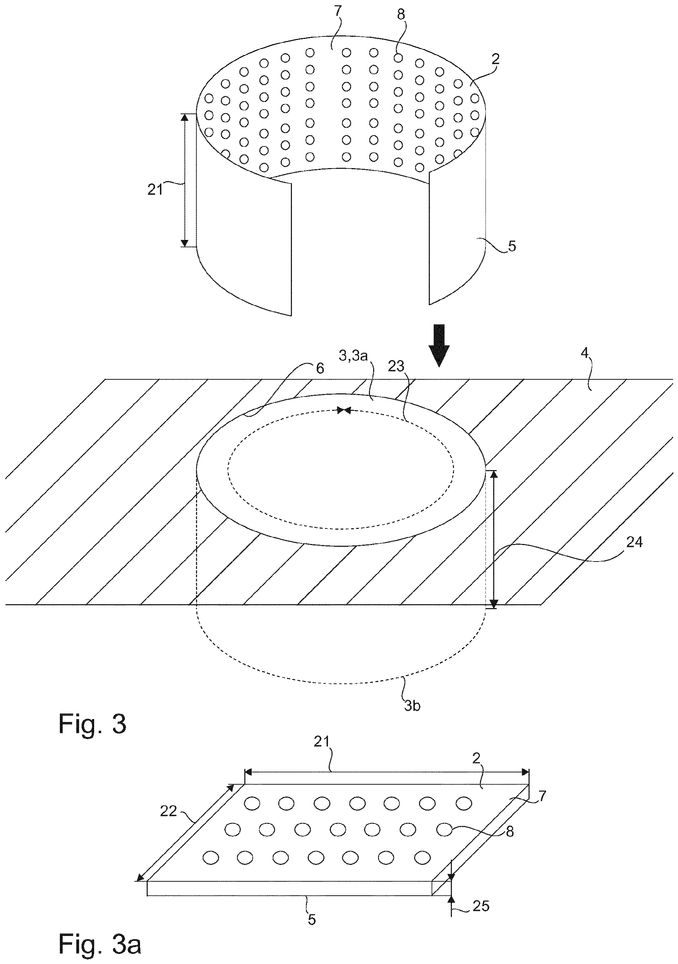

Das folienartige Element (2) ist ein Streifen mit einer Länge (21) und einer Breite (22), welcher vor dem Einbringen in den ersten Formholraum (3) zugeschnitten wird. Die Länge (21) des Streifens ist kleiner oder gleich dem inneren Umfang (23) des hohlzylindrischen ersten Formhohlraums (3) und die Breite (22) des Streifens ist kleiner oder gleich der Höhe (24) des hohlzylindrischen ersten Formhohlraums (3). Dies ist in den Figuren 3 und 3a zu erkennen.

Ferner weist das folienartige Element (2) eine Dicke (25) auf, welche dahingehend dimensioniert ist, dass das folienartige Element (2) eine ausreichende Elastizität aufweist, so dass das folienartige Element (2) nach dem Einbringen in den ersten Formhohlraum (3) selbständig an der Innenwand (6) des ersten Formhohlraums (3) anliegt.

Der erste Formhohlraum (3) ist als ein Hohlzylinder (3) ausgebildet, welcher mit einer Stirnwandung (3b) abgeschlossen ist. An der Stirnwandung (3b) ist eine erste Einspritzdüse (16) zentrisch angeordnet, durch welche das erste Kunststoffmaterial in den ersten Formhohlraum (3) eingespritzt wird. Weiterhin ist der erste Formhohlraum (3) Teil eines Formwerkzeugs (4).

In dem weiteren Verfahrensschritt b. wird ein Formkern (9) in den ersten Formhohlraum (3) eingebracht, so dass eine erste Kavität (10) gebildet wird. Dies ist in Figur 2b zu erkennen.

Der Formkern (9) ist zylinderförmig ausgebildet und wird zentrisch in den ersten Formhohlraum (3) eingebracht, so dass ein Abstand (17) zwischen der Mantelfläche des Formkerns und einer Innenwandfläche des ersten Formhohlraums (2) die Wandstärke (18) eines Vorspritzteils (11) definieren.

Der erste Formhohlraum (3) ist in einem stationären Element (4a) des Formwerkzeugs (4) und der Formkern (9) auf einem beweglichen Element (4b) des Formwerkzeugs (4) angeordnet.

In dem weiteren Verfahrensschritt c. wird nun das erste Kunststoffmaterial in die erste Kavität (10) eingespritzt. Das eingespritzte erste Kunststoffmaterial umschließt dabei die dreidimensionalen Elemente (8) und geht mit dem folienartigen Element (2) eine Verbindung ein. Hierdurch wird ein Vorspritzteil (11) mit einer äußeren Oberfläche (12), an welcher das folienartige Element (2) haftet, gebildet. Diese Mantelfläche (12) des Vorspritzteils wird somit zumindest abschnittsweise von der ersten Oberfläche (5) des folienartigen Elements (2) gebildet. Ein solches Vorspritzteil ist in Figur 4 gezeigt.

Der erste Formhohlraum (3) und der Formkern (9) weisen aneinander anliegende Elemente (3a, 9a) auf, so dass nach dem Eindringen des Formkerns (9) in den ersten Formhohlraum (3) eine geschlossene Kavität (10) durch diese beiden Elemente gebildet wird.

Das einzuspritzende Kunststoffmaterial wird bevorzugt in einer Plastifiziereinheit (28) plastifiziert und über einen Heißkanal (19) der ersten Kavität (10) zugeführt.

In dem weiteren Verfahrensschritt d. wird das von dem ersten Formholraum entformte Vorspritzteil (11) in einen zweiten Formhohlraum (13) transferiert. Dies erfolgt durch eine entsprechende Verlagerung des Formkerns (9), an welchem das entformte Vorspritzteil (11) angeordnet ist. Die äußere Oberfläche (12) des Vorspritzteils (11) und eine Innenwand (14) des zweiten Formhohlraums bilden dann eine zweite Kavität (15). Dabei wird der Formkern (9) mit dem Vorspritzteil (11) zentrisch in den zweiten Formhohlraum (13) eingebracht, so dass ein Abstand (29) zwischen der Mantelfläche (12) des Vorspritzteils (11) und einer Innenwandfläche (30) des zweiten Formhohlraums (13) die Wandstärke (32) der zweiten Schicht des Formteils definieren.

In dem weiteren Verfahrensschritt e. wird das zweite Kunststoffmaterial durch eine zweite Einspritzdüse (33) in den zweiten Formhohlraum (13) eingespritzt. Der zweite Formhohlraum (13) ist ebenso als ein mit einer Stirnwandung abgeschlossener Hohlzylinder ausgebildet. Die zweite Einspritzdüse (33) ist ebenso zentrisch an der Stirnwandung angeordnet. Das einzuspritzende Kunststoffmaterial wird in einer Plastifiziereinheit (28) plastifiziert und über einen Heißkanal (20) der zweiten Kavität (15) zugeführt.

In der Figur 4 ist ein Vorspritzteil (11) gezeigt. An der Wandungsschicht (27) ist das folienartige Element (2) angeordnet. Das Vorspritzteil (11) ist als Hohlzylinder mit einer Stirnwandung ausgebildet. Ausgehend von der Stirnwandung erstreckt sich eine seitliche Wandung, welche mit einem Gewinde ausgestattet ist. Das folienartige Element (2) und die Wandungsschicht bestehen dabei aus transparenten Kunststoffmaterialien.

In Figur 5 ist das Vorspritzteil (11) zum Teil mit dem Kunststoffmaterial bedeckt, welches die äußere Wandungsschicht (26) bildet. Zwischen der äußeren Wandungsschicht (26) und der inneren Wandungsschicht (27) ist das folienartige Element (2), welches mit dreidimensionalen Elementen (8) bestückt ist, angeordnet. Die dreidimensionalen Elemente (8) von dem ersten Kunststoffmaterial der inneren Wandungsschicht (27) umschlossen sind, und wobei zwischen dem ersten Kunststoffmaterial der inneren Wandungsschicht (27) und dem folienartigen Element (2) und zwischen dem zweiten Kunststoffmaterial des äußeren Wandungsschicht (26) und dem folienartigen Element (2) eine Verbindung besteht.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Mehrkomponenten-Spritzguss-Formteil
- 1a: Hohlzylinder
- 1b: Stirnwandung
- 2: folienartiges Element
- 3: erster Formhohlraum
- 3a: Hohlzylinder
- 3b: Stirnwandung des Hohlzylinders
- 4: Formwerkzeug
- 5: erste Oberfläche des folienartigen Elements
- 6: Innenwand des ersten Formhohlraums
- 7: zweite Oberfläche des folienartigen Elements
- 8: dreidimensionale Elemente
- 9: Formkern
- 9a: Mantelfläche des Formkerns
- 10: erste Kavität
- 11: Vorspritzteil
- 12: äußere Oberfläche des Vorspritzteils
- 13: zweiter Formhohlraum
- 14: Innenwand des zweiten Formhohlraums
- 15: zweite Kavität
- 16: erste Einspritzdüse
- 17: Abstand zwischen der Mantelfläche des Formkerns und Innenwandfläche
- 18: Wandstärke des Vorspritzteils
- 19: Heißkanal
- 20: Heißkanal
- 21: Länge des folienartigen Elements
- 22: Breite des folienartigen Elements
- 23: innerer Umfang des ersten Formhohlraums
- 24: Höhe des ersten Formhohlraums
- 25: Dicke des folienartigen Elements
- 26: äußere Wandungsschicht
- 27: innere Wandungsschicht
- 28: Plastifiziereinheit
- 29: Abstand zwischen der Mantelfläche des Vorspritzteils und einer Innenwandfläche
- 30: Innenwandfläche
- 32: Wandstärke der zweiten Schicht des Formteils
- 33: zweite Einspritzdüse
- 34: Gewinde

## Patentansprüche

1. Verfahren zum Herstellen eines Mehrkomponenten-Spritzguss-Formteiles (1) umfassend folgende Verfahrensschritte:
a. Einbringen eines folienartigen Elements (2) in einen ersten Formhohlraum (3), so dass eine erste Oberfläche (5) des folienartigen Elements (2) an einer Innenwand (6) des ersten Formhohlraums (3) anliegt, wobei eine zweite Oberfläche (7) des folienartigen Elements (2) mit dreidimensionalen Elementen (8) bestückt ist, welche von der zweiten Oberfläche (7) des folienartigen Elements (2) in den ersten Formhohlraum (3) hineinragen;
b. Einbringen eines Formkerns (9) in den ersten Formhohlraum (3), so dass eine erste Kavität (10) gebildet wird;
c. Einspritzen eines ersten Kunststoffmaterials in die erste Kavität (10), wobei das eingespritzte erste Kunststoffmaterial die dreidimensionalen Elemente (8) umschließt und mit dem folienartigen Element (2) eine Verbindung eingeht, wobei hierdurch ein Vorspritzteil (11) mit einer äußeren Oberfläche (12), an welcher das folienartige Element (2) haftet, gebildet wird;
d. Transferieren des Vorspritzteils (11) in einen zweiten Formhohlraum (13), wobei die äußere Oberfläche (12) des Vorspritzteils (11) und eine Innenwand (14) des zweiten Formhohlraums eine zweite Kavität (15) bilden;
e. Einspritzen eines zweiten Kunststoffmaterials in die zweite Kavität (15), wobei das eingespritzte zweite Kunststoffmaterial mit dem folienartigen Element (2) eine Verbindung eingeht.

2. Verfahren zum Herstellen eines Mehrkomponenten-Spritzguss-Formteiles (1) nach Anspruch 1,
**dadurch gekennzeichnet, dass**
das erste Kunststoffmaterial durch eine erste Einspritzdüse (16) in den ersten Formhohlraum (3) eingespritzt wird, wobei der erste Formhohlraum (3) als ein Hohlzylinder (3) ausgebildet ist, welcher mit einer Stirnwandung (3b) abgeschlossen ist, wobei die erste Einspritzdüse (16) zentrisch in dieser Stirnwandung (3b) angeordnet ist.

3. Verfahren zum Herstellen eines Mehrkomponenten-Spritzguss-Formteiles (1) nach Anspruch 2,
**dadurch gekennzeichnet, dass**
der Formkern (9) zylinderförmig ausgebildet ist und zentrisch in den ersten Formhohlraum (3) eingebracht wird, so dass ein Abstand (17) zwischen der Mantelfläche des Formkerns und einer Innenwandfläche des ersten Formhohlraums (2) die Wandstärke (18) des Vorspritzteils (11) definieren.

4. Verfahren zum Herstellen eines Mehrkomponenten-Spritzguss-Formteiles (1) nach einem der vorhergehenden Ansprüche,
**dadurch gekennzeichnet, dass**
das erste Kunststoffmaterial in die erste Kavität (10) und/oder das zweite Kunststoffmaterial in die zweite Kavität (15) über jeweils einen Heißkanal (19, 20) eingespritzt wird.

5. Verfahren zum Herstellen eines Mehrkomponenten-Spritzguss-Formteiles (1) nach Anspruch 2 oder 3,
**dadurch gekennzeichnet, dass**
das folienartige Element (2) vor dem Einbringen in den ersten Formholraum (3) zu einem Streifen mit einer Länge (21) und einer Breite (22) zugeschnitten wird, wobei die Länge (21) des Streifens kleiner oder gleich dem inneren Umfang (23) des hohlzylindrischen ersten Formhohlraums (3) und die Breite (22) kleiner oder gleich der Höhe (24) des hohlzylindrischen ersten Formhohlraums (3) ist.

6. Verfahren zum Herstellen eines Mehrkomponenten-Spritzguss-Formteiles (1) nach einem der vorhergehenden Ansprüche,
**dadurch gekennzeichnet, dass**
das folienartige Element (2) eine Dicke (25) aufweist, welche dahingehend dimensioniert ist, dass das folienartige Element (2) eine ausreichende Elastizität aufweist, so dass das folienartige Element (2) nach dem Einbringen in den ersten Formhohlraum (3) selbständig an der Innenwand (6) des ersten Formhohlraums (3) anliegt.

7. Verfahren zum Herstellen eines Mehrkomponenten-Spritzguss-Formteiles (1) nach einem der vorhergehenden Ansprüche,
**dadurch gekennzeichnet, dass**
das eingespritzte erste Kunststoffmaterial und/oder das eingespritzte zweite Kunststoffmaterial und/oder das eingebrachte folienartige Element transparent sind und/oder Thermoplasten, insbesondere ABS, PC, SAN, PMMA, PET sind.

8. Formteil (1), insbesondere ein Behältnis hergestellt durch ein Mehrkomponenten-Spritzgussverfahren und umfassend eine äußere Wandungsschicht (26) und eine innere Wandungsschicht (27), wobei die innere Wandungsschicht (27) aus einem ersten Kunststoffmaterial besteht und die äußere Wandungsschicht aus einem zweiten Kunststoffmaterial besteht,
**dadurch gekennzeichnet, dass**
zwischen der äußeren Wandungsschicht (26) und der inneren Wandungsschicht (27) ein folienartiges Element (2), welches mit dreidimensionalen Elementen (8) bestückt ist, angeordnet ist, wobei die dreidimensionalen Elemente (8) von dem ersten Kunststoffmaterial der inneren Wandungsschicht (27) umschlossen sind, und wobei zwischen dem ersten Kunststoffmaterial der inneren Wandungsschicht (27) und dem folienartigen Element (2) und zwischen dem zweiten Kunststoffmaterial der äußeren Wandungsschicht (26) und dem folienartigen Element (2) eine Verbindung besteht.

9. Formteil nach Anspruch 8
**dadurch gekennzeichnet, dass**
das Formteil (1) als ein Hohlzylinder (1a) ausgebildet ist, welcher mit einer Stirnwandung (1 b) abgeschlossen ist.

10. Formteil nach einem der Ansprüche 8 bis 9,
**dadurch gekennzeichnet, dass**
das folienartiges Element (2) als Streifen mit einer Länge (21) und einer Breite (22) ausgebildet ist, wobei die Länge (21) des Streifens sich entlang des Umfangs der inneren Wandungsschicht (27) zumindest abschnittsweise erstreckt.

11. Formteil nach einem der Ansprüche 8 bis 10,
**dadurch gekennzeichnet, dass**
die dreidimensionalen Elemente (8) Strasssteine sind, welche in Form von Schriftzügen oder Mustern auf dem folienartigen Element (2) angeordnet sind.

12. Formteil nach einem der Ansprüche 8 bis 11,
**dadurch gekennzeichnet, dass**
das eingespritzte erste Kunststoffmaterial und/oder das eingespritzte zweite Kunststoffmaterial und/oder das eingebrachte folienartige Element (2) transparent sind und/oder Thermoplasten, insbesondere ABS, PC, SAN, PMMA, PET, sind.

13. Formteil nach einem der Ansprüche 8 bis 12,
**dadurch gekennzeichnet, dass**
die Verbindung zwischen dem folienartigen Element (2) und dem ersten Kunststoffmaterial der inneren Wandungsschicht (27) und die Verbindung zwischen dem folienartigen Element (2) und dem zweiten Kunststoffmaterial der äußeren Wandungsschicht (26) eine Schmelzverbindung ist.
